# EUROPEAN PATENT SPECIFICATION

(11) **EP 4 081 926 B1**
(45) Date of publication and mention of the grant of the patent: **05.03.2025**
(21) Application number: 20708373.4
(22) Date of filing: 30.01.2020
(51) Int. Cl.: G06F 30/17, G06F 30/20, G06F 111/04

(54) **AUTOMATIC SIMPLIFICATION OF A RIGID-BODY SIMULATION**
AUTOMATISCHE VEREINFACHUNG EINER STARRKÖRPERSIMULATION
SIMPLIFICATION AUTOMATIQUE D'UNE SIMULATION DE CORPS RIGIDES

(43) Date of publication of application: 02.11.2022
(73) Proprietor: Siemens Aktiengesellschaft, 80333 München (DE)
(72) Inventor: MCDANIEL, Richard Gary, Hightstown, New Jersey 08520 (US)
(74) Representative: Horn Kleimann Waitzhofer Schmid-Dreyer Patent- und Rechtsanwälte PartG mbB
(86) International application number: PCT/US2020/015784
(87) International publication number: WO 2021/154251

(56) References cited:
- US-A1- 2013 317 797
- US-B2- 8 537 165
- US-B2- 8 571 840

## Description

### BACKGROUND

### 1. Field

The present disclosure relates generally to the field of computer-implemented simulation of moving objects.

### 2. Description of the Related Art

Simulation of physical systems may be used, for example, for predicting behavior of real objects or for explaining behavior of past events, among other applications. A rigid body simulation is a method where moving objects are represented as point bodies in space. The inertia of the bodies may be determined over time using various methods and constraints between the bodies and physical properties, such as contact forces.

In some applications, the systems of objects that users create to be simulated may span many hundreds of entities. These include parts that move as well as objects that are attached to these parts. Furthermore, objects may become attached to other objects or get separated from previously attached objects dynamically over the course of simulation.

In general, a physical simulation uses significant computational resources. Making simulations faster may allow more complex simulations to be run within a given resource budget. A system that performs functions using simulation as one aspect may be able to devote more resources to other functions, such as image manipulation, or motion planning, if the simulation can be made more efficient.

The document US 2013/317797 A1 discloses methods for simulating the motion and collision of objects.

The document US 8,571,840 B2 discloses methods for preparing a mechanical model for a dynamic simulation, including identifying a first plurality of bodies in a mechanical model and each of the bodies in the first plurality of bodies being related to at least one other body by at least one constraint that removes or limits at least one degree of freedom for that body in relation to another body.

The document US 8,537,165 B2 discloses methods for simulating the motion of three-dimensional models.

### SUMMARY

Aspects of the present disclosure address at least some of the above-mentioned technical challenges, by providing a technique for automatic optimization of a physical simulation to improve simulation performance.

The present invention is defined by the enclosed claims.

According to a first aspect of the disclosure, a computer-implemented method is provided for simulating motion of objects. As per the method, a computer creates a three-dimensional model system comprising a plurality of bodies, wherein each body comprises one or more collision surfaces and one or more visual surfaces. The computer identifies one or more groups of bodies from the plurality of bodies, such that bodies belonging to a group are constrained in relation to each other by fixed joints. The computer processes each group of bodies, such that: if a group of bodies comprises a background object as a constituent body, then all constituent bodies of the group are removed while preserving the respective collision surfaces and visual surfaces; if a group of bodies does not comprise the background object as a constituent body, then the group of bodies is modeled as a single merged body, the merged body having defined mass properties, position and orientation determined based on mass properties and structure of constituent bodies of the group. The computer then executes a simulation code solving rigid body dynamics for the model system based on said processing of each group of bodies.

According to a second aspect of the disclosure, a non-transitory computer-readable storage medium is provided, the computer-readable storage medium including instructions that when executed by a computer, cause the computer to perform the above-described method.

According to a third aspect of the disclosure, a system is provided for simulating an automation application. The system comprises a modeling unit configured for creating a three-dimensional model system representing an industrial environment, the model system comprising a plurality of bodies representing physical components of the industrial system, wherein each body of the model system comprises one or more collision surfaces and one or more visual surfaces. The system further comprises a simulation engine configured for identifying one or more groups of bodies from the plurality of bodies, such that bodies belonging to a group are constrained in relation to each other by fixed joints and processing each group of bodies. The simulation engine processes each group of bodies, such that: if a group of bodies comprises a background object as a constituent body, then all constituent bodies of the group are removed while preserving the respective collision surfaces and visual surfaces; if a group of bodies does not comprise the background object as a constituent body, then the group of bodies is modeled as a single merged body, the merged body having defined mass properties, position and orientation determined based on mass properties and structure of constituent bodies of the group. The simulation group is further configured for executing a simulation code solving rigid body dynamics for the model system based on said processing of each group of bodies.

### BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.
FIG. 1 illustrates an overview of a simulation system for an automation application.
FIG. 2 is a flowchart illustrating a simulation method according an embodiment of the disclosure.
FIG. 3 illustrates a model system representing an industrial environment.
FIG. 4 illustrates shows two surface representations for an object in the model system, namely a visual surface representation and a collision surface representation.
FIG. 5 illustrates a rigid body graph depicting simulation entities for the model system shown in FIG. 3.
FIG. 6 illustrates a grouping of bodies connected by fixed joints in the rigid body graph of FIG. 5.
FIG. 7 illustrates a combination of constituent bodies into a merged body.
FIG. 8 illustrates a rigid body graph as a result of merging of bodies connected by fixed joints.
FIG. 9 illustrates an exemplary computing environment within which embodiments of the disclosure may be implemented.

### DETAILED DESCRIPTION

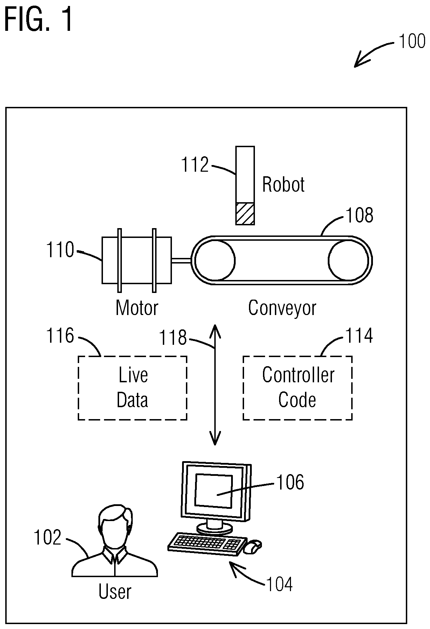

FIG. 1 illustrates an example of a simulation system 100, according to an aspect of the present disclosure. In the shown embodiment, the simulation system 100 is implemented at an automated production site. At the production site, a user 102 may utilize a user computer 104 to execute an engineering tool 106. The engineering tool 106 may allow the user 102 to download models of physical components/devices of the production site, such as one or more conveyors 108, motors 110 and robots 112, among others. The models may be available from component suppliers, for example, via marketplace servers (not shown). The engineering tool 106 may be configured to create a system design of the industrial environment based on one or more instructions from the user 102. The engineering tool 106 may comprise a modeling unit which may utilize the downloaded models to create a three-dimensional model system from the system design, a simulation engine to carry out a simulation of the model system performing computations that mimic the physical activities of the modeled items, and a graphical user interface for displaying the simulation of the model system. In an exemplary embodiment, the engineering tool 106 may comprise a dynamics simulation engine that may be embedded within a 3D graphical editor and visualization environment. The simulation engine may be configured to simulate the physical activity of hardware devices and the work products that the devices manipulate and transform. The physical objects being simulated may be representative of actual hardware devices. The simulation for a given device is formulated to match the behavior of that device and to perform the same actions under the same input conditions within the capability of the simulation. The simulation may track the geometric shape, position, kinematic linkages, and dynamics of the objects. The simulation may compute the internal state and logical activity of the objects such as electrical or programmatic activity. The simulation may also include the ability to add and remove objects from the simulation dynamically. This ability can be used to simulate the transformation of objects such as cutting, crushing, and shaping. It may also be used to simulate the introduction and removing of work products from the process.

By simulating an industrial environment, the user 102 can easily identify the necessary physical components and layout needed to enable a particular process. Once the layout has been determined, the engineering tool 106 can generate additional details (e.g., a parts list and/or blueprint) so that the necessary physical components can be ordered (if they have not been purchased already) and configured in the desired layout. Additionally, in some embodiments, the engineering tool 106 may generate controller code that may be used directly on physical components such as programmable logic controllers. The generated controller code may also be deployed directly on the physical component itself for components that have this capability. For example, in FIG. 1, the engineering tool 106 can generate controller code 114 that may be utilized directly on the controllers associated with the physical devices 108, 110 and 112. Thus, installation of the physical devices is streamlined since the controller code 114 is ready for use soon after the system design is completed. Additionally, in some embodiments, the engineering tool 106 may be configured to directly integrate live data 116 from the simulation system 100. To this end, the simulation system 100 may comprise a network interface 118 may be provided facilitate transfer of data between the engineering tool 106 and the industrial environment.

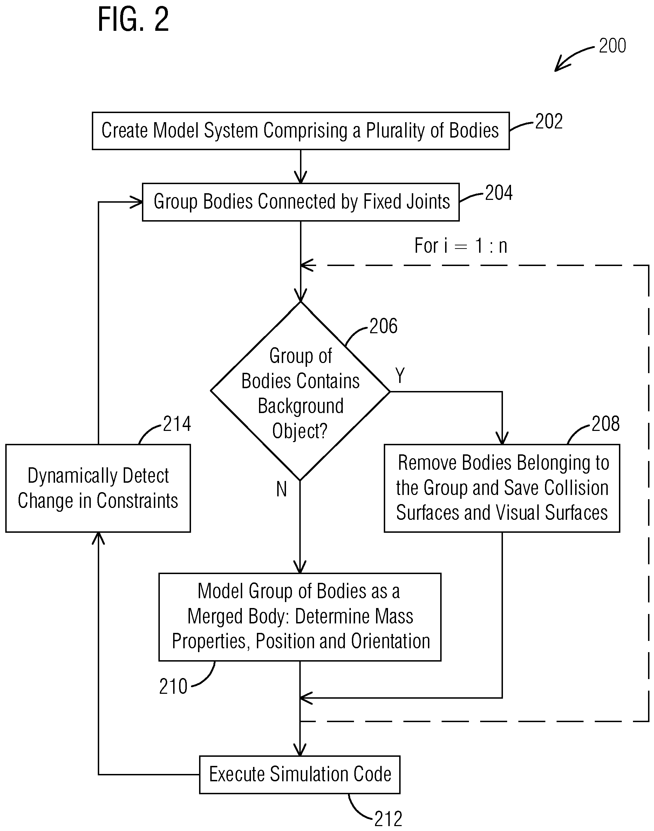

FIG. 2 shows a flowchart illustrating an exemplary method 200 for simulating motion of physical objects. The described method 200 may be used, for example, for simulating an automation application as referred to in FIG. 1. Block 202 of the method 200 comprises creating a three-dimensional model system comprising a plurality of bodies, which represent physical objects or components in an industrial environment to be simulated. In the illustrated embodiment, the model system may be created by a modeling unit of the engineering tool 106. The model system may be created, for example, from a system design of the industrial environment based on one or more instructions from a user.

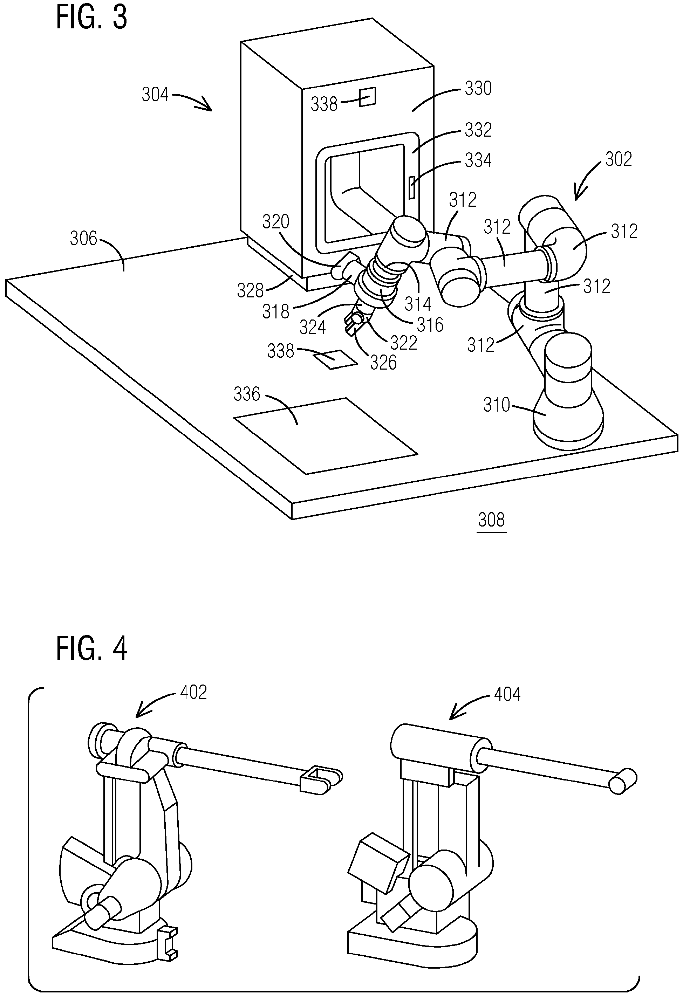

FIG. 3 shows an example of a model system 300 representing an industrial environment comprising a robot 302 configured to operate a CNC machine 304. The model system's objects or bodies may be derived, at least in part, from simulation objects and other kinds of CAD design. In future applications, it might also be possible to derive objects of the model system 300 from sensor data. For example, if the automation application has cameras, the model system 300 could comprise objects that the camera algorithms detect. The engineering tool 106 may still be employed to define these objects and to construct the semantics in the different domains that the system can recognize.

In the model system 300, the robot 302 and the CNC machine 304 are attached to a stationary table 306(or floor). Since the table 306 is stationary, it may be considered as being attached to a fixed background 308. The robot 302 and the CNC machine 304 are each made up of multiple bodies, which may be declared by the user as distinct rigid bodies (i.e., moving bodies) for the purpose of simulation. For example, the robot 302 comprises a robot base 310, multiple robot arms 312, a robot flange 314, a torque cuff 316, a camera mount 318, a camera 320, a grip adapter 322, a grip base 324 (or gripper), multiple grip fingers 326 and multiple finger tips (not visible). The CNC machine 304 comprises a platform 328, a CNC cabinet 330, a door 332, and a door handle 334. The table 306 may be provided with a defined pickup area 336. The model system 300 may also comprise tags 338 attached to the table 306 and the CNC cabinet 330 respectively.

Each body of the model system 300 may be provided with one or more visual surfaces, which may be presented to a user to visualize, and one or more collision surfaces, which define constraints representing the surface of the body in the simulation. Typically, visual surfaces and collision surfaces of a simulated body are not the same. To form a collision surface, the complex shape of the body is typically broken down into a set of simpler types of shapes, such as boxes, spheres, cylinders, polyhedrons, among other shapes. This allows simulation with collision responses to be performed efficiently and also helps to create bounding surfaces for the purpose of planning and collision avoidance. An example in which a complex shape like a robot may be split into collision surfaces is shown in FIG. 4. More specifically, FIG. 4 shows multiple surface representations for a simulated body of a robot, namely a visual surface representation 402 for display purpose, and a collision surface representation 404, to be used in the actual simulation. When running in simulation, the collision shapes act as stand-ins to the complicated 3D shape of the body.

According to the illustrated embodiment, the engineering tool 106 includes a simulation engine configured to mimic the physical activities of the modeled bodies of the model system 300 based on objects and constraints defined by the user. For solving rigid body dynamics of the model system 300, the simulation engine may include appropriate physics libraries, for example, similar to that used in computer gaming.

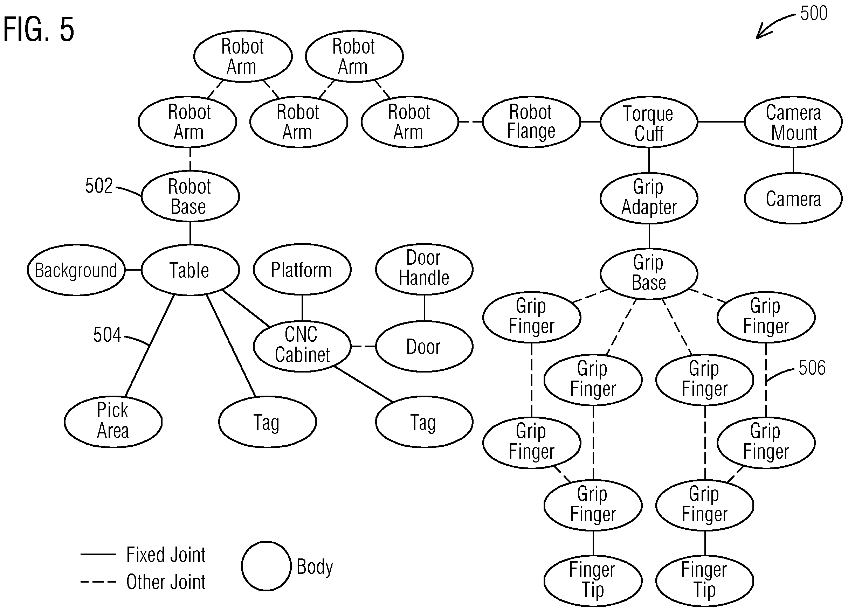

FIG. 5 illustrates a rigid body graph 500 depicting simulation entities for the model system 300 shown in FIG. 3. In particular, the rigid body graph 500 depicts an arrangement of connected nodes, wherein the nodes depict the individual bodies (or objects) of the model system 300 and connections between the nodes depict joints between the bodies. In FIG. 5, bodies 502 represent individual rigid bodies that are defined by the user. Connections between the bodies 502 may either be defined as a fixed joint 504 or as an other joint 506. As used herein, the term "fixed joint" refers to a connection between bodies which constrains any relative motion between the connected bodies. As used herein, the term "other joint" refers to a connection between bodies which allows at least some degree of relative motion between the connected bodies. An example of an "other joint" may include, for example, a hinge joint.

Generally, a user may not be careful to determine which bodies should be considered individual, separate entities and which should be considered a combined single entity. For example, the floor or table of the simulated model system most likely never moves; yet, a user may assign the table a body-like status with mass properties. The table may be attached to the background with a fixed joint to prevent it from moving, rather than not having it be a body in the first place. Likewise, bodies attached to the table, such as the robot base, the CNC cabinet, and other items that could be bolted down may also be modeled as individual bodies. Similarly, such bodies are attached to others with fixed joints so that their movements are constrained.

Existing simulation engines are designed to allow the user to optimize the physics objects and are not configured to modify anything that the user provides. Running the simulation engine with extraneous bodies as shown in FIG. 5 does not necessarily change the result of the simulation. Bodies fixed to the background will likely not move. However, the engine would be consequently doing more work than is needed to solve for bodies that cannot possibly move. Furthermore, implicit constraints between bodies that are fixed together, such as collision surfaces, will also be active. This causes extra time to search for potential collisions among closely spaced bodies that, in fact, can never touch.

The simulation method as per the present disclosure provides an optimization of a simulation program by automatically removing redundant bodies by the simulation engine, to thereby speed up computation of a physical simulation without changing the desired result.

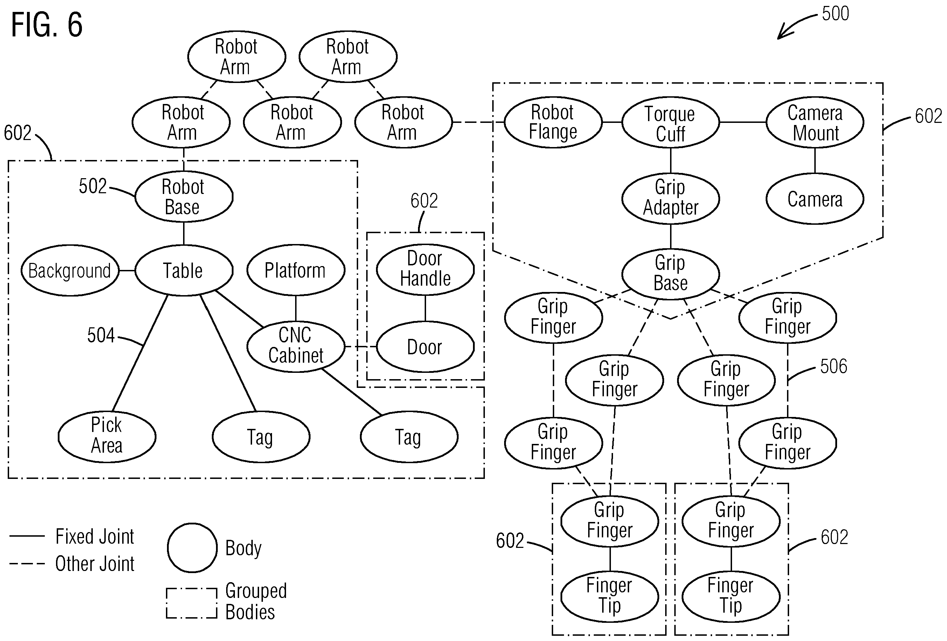

Referring back to FIG. 2, block 204 of the method 200 involves identifying one or more groups of bodies from the plurality of user defined bodies, such that bodies belonging to a group are constrained in relation to each other by fixed joints. The simulation engine may be configured to perform this step, for example, by scanning the rigid body graph 500, based on a depth-first or breadth-first algorithm, to identify bodies that are connected by fixed joints. FIG. 6 shows how the rigid bodies in FIG. 5 may be collected into groups 602, where each group 602 comprises bodies 502 connected by fixed joints 504. For each set of rigidly connected bodies 502, the group 602 is subsequently processed to remove redundant bodies.

The processing of each group 602 is carried out based on whether or not the group 602 comprises a background object as a constituent body, as represented in the decision block 206 in FIG. 2. The background is not a real body. In some simulation systems, a rigid body with infinite mass and inertia properties stands in for the background, but this is not always true. The background represents a completely fixed object that cannot possibly move. For example, the floor of a building usually does not move (unless the simulation is specifically about that kind of movement, like an earthquake). At block 208 of the method 200, for a group containing the background object, the constituent bodies are removed altogether from solving the simulation. However, the contents of the bodies, such as collision surfaces and visual surfaces are preserved and utilized in the execution of the simulation code (block 212). In the example of FIG. 6, the leftmost group contains the background object. In this example, by removing the bodies in this group, seven of the original thirty bodies are eliminated.

At block 210 of the method 200, for a group not containing the background object, the group of bodies is modeled as a single merged body or composite body. For the merged body, mass properties, position and orientation are determined based on mass properties and structure of constituent bodies of the group.

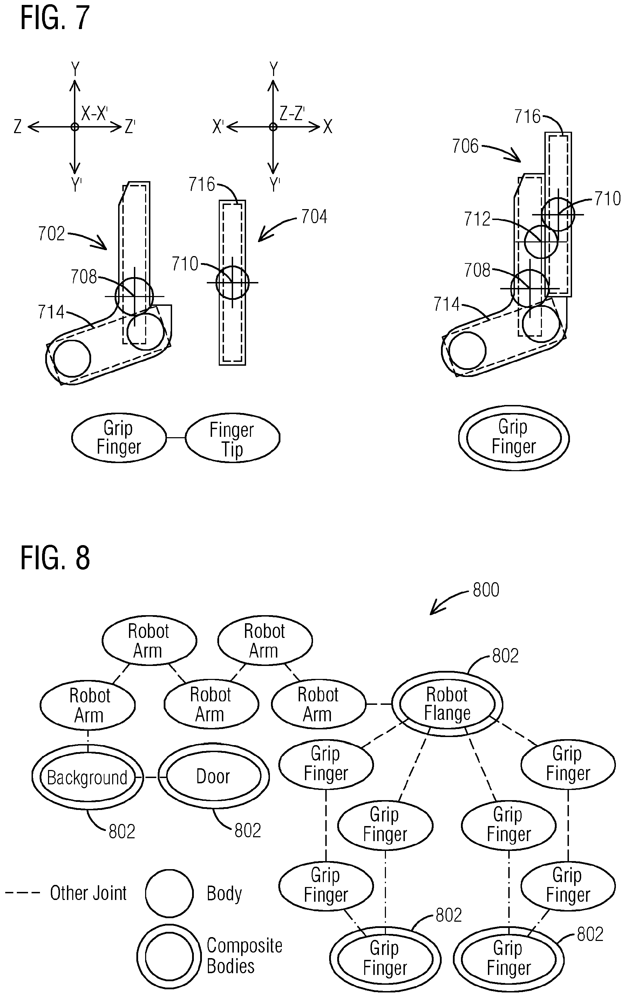

FIG. 7 illustrates the combination of two constituent bodies of a group of rigidly connected bodies into a merged body. The constituent bodies here are respectively a grip finger 702 and a finger tip 704. The merged body is designated as 706 on the right-hand side of the figure. The left-hand side of the figure shows the constituent bodies 702, 704 as being separated, for illustrative purposes only. In reality, the positions of the constituent bodies 702 and 704 would be the same both before and after processing. The centers of mass of the constituent bodies 702, 704 are designated respectively by the points 708 and 710. The mass of the merged body 706 may be determined as the sum of the masses of the constituent bodies 702, 704 of the group. The position of the merged body 706 may be defined by the position of its center of mass 712. The center of mass 712 of the merged rigid body 706 may be determined as the weighted sum of the centers of mass 708, 710 of the constituent bodies 702, 704 being merged. Furthermore, an inertia tensor of the merged body 706 may be determined as a summation of the inertia tensors of the constituent bodies 702, 704, where each is transformed to be placed at the center of mass 712 of the merged body 706, and at the same rotation (i.e., angular position).

Still referring to FIG. 7, the collision surfaces for the constituent bodies 702, 704 are designated by dotted lines 714, 716, while the respective shape of the bodies 702, 704 represent their visual surfaces. The collision surfaces and visual surfaces of the constituent bodies 702, 704 are constructed in 3D space (local to the bodies) in relation to respective origins, which are the centers of mass 708 and 710 of the bodies 702 and 704 respectively. In order to construct the collision surfaces and visual surfaces of the merged body 706, the collection of collision surfaces and the collection of visual surfaces of the constituent bodies 702, 704 may be transformed to an origin defined by the center of mass 712 of the merged body 706, while keeping their global positions unchanged.

FIG. 7 shows orthogonal references axes for the constituent bodies 702, 704. The orientation or angular position of the constituent bodies 702, 704 may be defined by an angular transformation of their axes in 3D such as with a 3x3 matrix or a quaternion. The orientation of the merged body 706 may be determined in several different ways. For example, the orientation of the merged body 706 may be defined as an angular position using the transform of the body 702, or the transform of the body 704, or using any other arbitrarily chosen reference frame. Generally, the orientation of the body is not critical to the simulation provided the inertia tensor is correct for that frame.

Referring back to FIG. 2, blocks 206 through 210 of the method 200 may be repeated for each of n identified groups to generate a simulation code. Block 212 of the method 200 involves executing the simulation code solving rigid body dynamics for the model system based the above-described processing of each group of bodies.

FIG. 8 illustrates a rigid body graph 800 as a result of merging of bodies connected by fixed joints. As seen herein, from the original thirty individual rigid bodies from FIG. 5, the number of bodies to be simulated is reduced to fifteen rigid bodies, counting each merged body 802 as a single rigid body. As a result, the simulation engine can run significantly faster and produce more precise results than it could if all thirty of the original objects were simulated. The state variables of the original rigid bodies and their original connections may be maintained by the system to allow for dynamic modification of the bodies and for interaction with other systems.

Continuing reference to FIG. 2, at block 214, during execution of the simulation code, changes in constraints are dynamically detected. For example, if the application removes fixed joints from the simulation dynamically, the method will reconsider the portion of the rigid body graph of which the fixed joint was made part. If the component breaks into multiple bodies, each will be reassigned the collision surfaces and visual surfaces as needed. Also, the mass properties, position, and orientation will be recomputed for the new merged bodies as described above as well as assigning linear and angular velocities to the objects based on the original body's momentum. If the fixed joint splits out a section of rigid bodies from the background component, a new rigid body is produced for the newly moving elements. The remaining elements still fixed to the background are left without a rigid body. The combined momentum of split bodies are the same as the merged body's momentum from which they were split and for a body split from the background, its initial velocity would be zero. Based on the detected change in constraints at block 214, the grouping of bodies in the model system may be dynamically modified (go to block 204). The modified grouping of bodies is then processed, as described above, to dynamically modify the simulation code.

In one embodiment, when a user is querying the state of a constituent body that was merged into a group, the program may be configured to return a motion characteristic of the constituent body (such as linear velocity/momentum, angular velocity/momentum, among others) as though the constituent body was still used in the simulation. The state of the constituent body may be determined by transforming a motion characteristic of the merged body representing the group, using a position offset and a rotation offset between the constituent body and the merged body. The position offset refers to an offset between the center of mass of the constituent body and that of the merged body. The rotational offset refers to an offset in angular positions of the constituent body and the merged body. Forces between elements of a merged body are zero and forces between a merged body and other bodies would compute the same as they would for separate bodies.

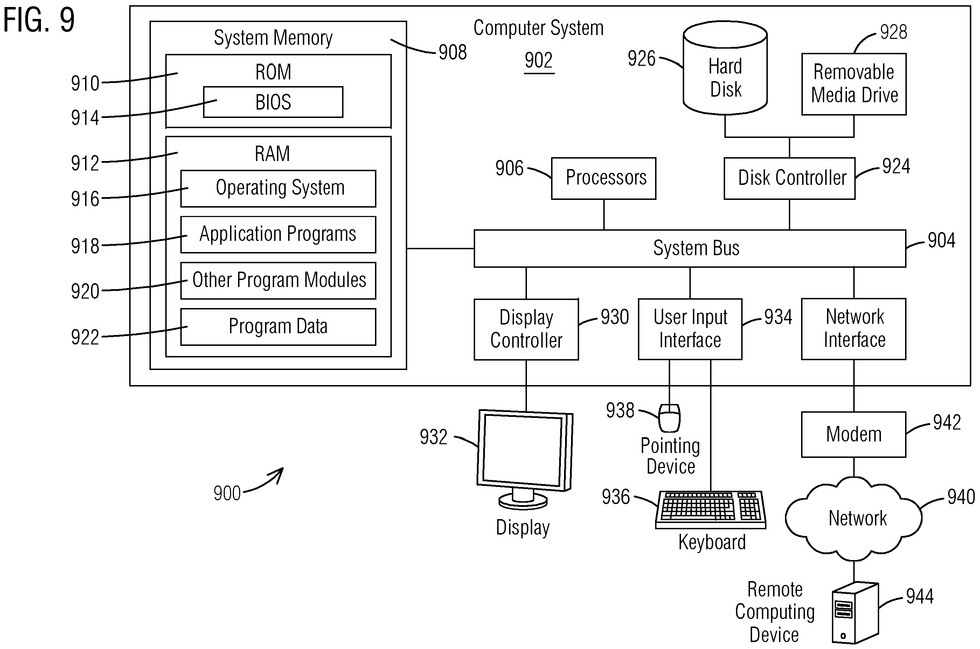

FIG. 9 illustrates an exemplary computing environment 900 within which embodiments of the disclosure may be implemented. For example, computing environment 900 may be used to implement one or more components of the simulation system 100 shown in FIG. 1. Computers and computing environments, such as computer system 902 and computing environment 900, are known to those of skill in the art and thus are described briefly here.

As shown in FIG. 9, the computer system 902 may include a communication mechanism such as a system bus 904 or other communication mechanism for communicating information within the computer system 902. The computer system 902 further includes one or more processors 906 coupled with the system bus 904 for processing the information.

The processors 906 may include one or more central processing units (CPUs), graphical processing units (GPUs), a dedicated physics processing unit (PPU), or any other processor known in the art. More generally, a processor as used herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

Continuing with reference to FIG. 9, the computer system 902 also includes a system memory 908 coupled to the system bus 904 for storing information and instructions to be executed by processors 906. The system memory 908 may include computer readable storage media in the form of volatile and/or nonvolatile memory, such as read only memory (ROM) 910 and/or random access memory (RAM) 912. The system memory RAM 912 may include other dynamic storage device(s) (e.g., dynamic RAM, static RAM, and synchronous DRAM). The system memory ROM 910 may include other static storage device(s) (e.g., programmable ROM, erasable PROM, and electrically erasable PROM). In addition, the system memory 908 may be used for storing temporary variables or other intermediate information during the execution of instructions by the processors 906. A basic input/output system 914 (BIOS) containing the basic routines that help to transfer information between elements within computer system 902, such as during start-up, may be stored in system memory ROM 910. System memory RAM 912 may contain data and/or program modules that are immediately accessible to and/or presently being operated on by the processors 906. System memory 908 may additionally include, for example, operating system 916, application programs 918, other program modules 920 and program data 922.

The computer system 902 also includes a disk controller 924 coupled to the system bus 904 to control one or more storage devices for storing information and instructions, such as a magnetic hard disk 926 and a removable media drive 928 (e.g., floppy disk drive, compact disc drive, tape drive, and/or solid state drive). The storage devices may be added to the computer system 902 using an appropriate device interface (*e.g.,* a small computer system interface (SCSI), integrated device electronics (IDE), Universal Serial Bus (USB), or FireWire).

The computer system 902 may also include a display controller 930 coupled to the system bus 904 to control a display 932, such as a cathode ray tube (CRT) or liquid crystal display (LCD), among other, for displaying information to a computer user. The computer system 902 includes a user input interface 934 and one or more input devices, such as a keyboard 936 and a pointing device 938, for interacting with a computer user and providing information to the one or more processors 906. The pointing device 938, for example, may be a mouse, a light pen, a trackball, or a pointing stick for communicating direction information and command selections to the one or more processors 906 and for controlling cursor movement on the display 932. The display 932 may provide a touch screen interface which allows input to supplement or replace the communication of direction information and command selections by the pointing device 938.

The computer system 902 may perform a portion or all of the processing steps of embodiments of the disclosure in response to the one or more processors 906 executing one or more sequences of one or more instructions contained in a memory, such as the system memory 908. Such instructions may be read into the system memory 908 from another computer readable medium, such as a magnetic hard disk 926 or a removable media drive 928. The magnetic hard disk 926 may contain one or more datastores and data files used by embodiments of the present disclosure. Datastore contents and data files may be encrypted to improve security. The processors 906 may also be employed in a multi-processing arrangement to execute the one or more sequences of instructions contained in system memory 908. In alternative embodiments, hard-wired circuitry may be used in place of or in combination with software instructions. Thus, embodiments are not limited to any specific combination of hardware circuitry and software.

As stated above, the computer system 902 may include at least one computer readable medium or memory for holding instructions programmed according to embodiments of the disclosure and for containing data structures, tables, records, or other data described herein. The term "computer readable medium" as used herein refers to any medium that participates in providing instructions to the one or more processors 906 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 926 or removable media drive 928. Non-limiting examples of volatile media include dynamic memory, such as system memory 908. Non-limiting examples of transmission media include coaxial cables, copper wire, and fiber optics, including the wires that make up the system bus 904. Transmission media may also take the form of acoustic or light waves, such as those generated during radio wave and infrared data communications.

The computing environment 900 may further include the computer system 902 operating in a networked environment using logical connections to one or more remote computers, such as remote computing device 944. Remote computing device 944 may be a personal computer (laptop or desktop), a mobile device, a server, a router, a network PC, a peer device or other common network node, and typically includes many or all of the elements described above relative to computer system 902. When used in a networking environment, computer system 902 may include modem 942 for establishing communications over a network 940, such as the Internet. Modem 942 may be connected to system bus 904 via user network user input interface 934, or via another appropriate mechanism.

Network 940 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 902 and other computers (e.g., remote computing device 944). The network 940 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 940.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically, wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the disclosure to accomplish the same objectives. Although this disclosure has been described with reference to particular embodiments, it is to be understood that the embodiments and variations shown and described herein are for illustration purposes only. Modifications to the current design may be implemented by those skilled in the art, as long as they fall within the scope as defined by the appended independent claims.

## Claims

1. A computer-implemented method for simulating an industrial environment of a production site to simulate motion of objects in the industrial environment of the production site with collision responses, the method comprising:
- creating (200), by a computer (104; 902), a three-dimensional model system representing the industrial environment of the production site, the model system comprising a plurality of bodies representing physical components of the industrial environment of the production site, wherein each body comprises one or more collision surfaces to define constraints representing the surface of the respective body and one or more visual surfaces to be presented to a user to visualize the respective body,
- identifying (204), by the computer, one or more groups of bodies from the plurality of bodies, such that bodies belonging to a group are constrained in relation to each other by fixed joints,
- processing, by the computer, each group of bodies, the processing comprising:
if a group of bodies comprises a background object as a constituent body, then removing (208) all constituent bodies of the group while preserving the respective collision surfaces and visual surfaces, and
if a group of bodies does not comprise the background object as a constituent body, then modelling (210) the group of bodies as a single merged body, the merged body having defined mass properties, position and orientation determined based on mass properties and structure of constituent bodies of the group, and
- executing (212), by the computer, a simulation code solving rigid body dynamics for the model system based on said processing of each group of bodies.

2. The method of claim 1, wherein a mass of the merged body is determined as a sum of masses of the constituent bodies of the group.

3. The method of claim 2, comprising determining, by the computer, a center of mass of the merged body to define the position of the merged body.

4. The method of claim 3, comprising determining, by the computer, an inertia tensor of the merged body as a summation of original inertia tensors of the constituent bodies of the group, each original inertia tensor being transformed to be placed at the center of mass of the merged body, without changing respective angular positions.

5. The method of claim 3, comprising determining, by the computer, the orientation of the merged body is defined by determining an angular transformation of one of the constituent bodies in three-dimensional space.

6. The method of claim 3, comprising determining, by the computer, a collision surface and a visual surface of the merged body by respectively transforming a collection of collision surfaces and a collection of visual surfaces of the constituent bodies of the group to an origin defined by the center of mass of the merged body.

7. The method of claim 1, wherein said identifying of one or more groups of bodies comprises:
generating, by the computer, a rigid body graph comprising an arrangement of connected nodes, wherein the nodes depict the bodies of the model system and connections between the nodes depict joints between the bodies, and
scanning, by the computer, the rigid body graph via a breadth-first or a depth-first search algorithm, to identify one or more groups of bodies connected by fixed joints.

8. The method of claim 1, further comprising:
dynamically modifying, by the computer, the grouping of bodies in the model system in response to a detected change in constraints during the execution of the simulation code, and
using the modified grouping of bodies in the processing step to thereby modify the simulation code.

9. The method of claim 1, further comprising:
in response to a user query, returning, by the computer, a motion characteristic of a constituent body of the group,
wherein the motion characteristic of the constituent body is determined by transforming a motion characteristic of the merged body using a position offset and a rotation offset between the constituent body and the merged body.

10. The method of claim 1, wherein the model system is created based on a system design of the industrial environment, the system design being generated based on one or more instructions from a user.

11. The method of claim 1, further comprising:
displaying, by the computer, a simulation of the model system in a graphical user interface.

12. A non-transitory computer-readable storage medium, the computer-readable storage medium including instructions that when executed by a computer (104; 902), cause the computer (104; 902) to execute the computer-implemented method for simulating an industrial environment of a production site according to one of claims 1 to 11

13. A system for simulating an industrial environment of a production site to simulate motion of objects in the industrial environment of the production site with collision responses, the system comprising:
a modeling unit configured to create (200) a three-dimensional model system representing the industrial environment of the production site, the model system comprising a plurality of bodies representing physical components of the industrial environment of the production site, wherein each body of the model system comprises one or more collision surfaces to define constraints representing the surface of the respective body and one or more visual surfaces to be presented to a user to visualize the respective body, and
a simulation engine configured to:
identify (204) one or more groups of bodies from the plurality of bodies, such that bodies belonging to a group are constrained in relation to each other by fixed joints,
process each group of bodies, the processing comprising:
if a group of bodies comprises a background object as a constituent body, then removing (208) all constituent bodies of the group while preserving the respective collision surfaces and visual surfaces, and
if a group of bodies does not comprise the background object as a constituent body, then modelling (210) the group of bodies as a single merged body, the merged body having defined mass properties, position and orientation determined based on mass properties and structure of constituent bodies of the group, and
execute (212) a simulation code solving rigid body dynamics for the model system based on said processing of each group of bodies.

14. The system of claim 13, further comprising a network interface configured to facilitate transfer of data between the system and the industrial environment.

15. The system of claim 13, wherein the modeling unit is configured for creating the model system based on a system design of the industrial environment, the system design being generated based on one or more instructions from a user.

## Patentansprüche

1. Computerimplementiertes Verfahren zum Simulieren einer Industrieumgebung einer Produktionsstätte, um die Bewegung von Objekten in der Industrieumgebung der Produktionsstätte mit Kollisionsreaktionen zu simulieren, wobei das Verfahren umfasst:
- Erzeugen (200), durch einen Computer (104; 902), eines dreidimensionalen Modellsystems, das die Industrieumgebung der Produktionsstätte repräsentiert, wobei das Modellsystem eine Vielzahl von Körpern umfasst, die physische Komponenten der Industrieumgebung der Produktionsstätte repräsentieren, wobei jeder Körper eine oder mehrere Kollisionsflächen, um Beschränkungen zu definieren, die die Oberfläche des jeweiligen Körpers repräsentieren, und eine oder mehrere visuelle Oberflächen, die einem Benutzer zum Visualisieren des jeweiligen Körpers präsentiert werden sollen, umfasst,
- Identifizieren (204), durch den Computer, einer oder mehrerer Gruppen von Körpern aus der Vielzahl von Körpern, sodass Körper, die zu einer Gruppe gehören, durch feste Gelenke bezüglich zueinander beschränkt werden,
- Verarbeiten, durch den Computer, jeder Gruppe von Körpern, wobei das Verarbeiten umfasst:
falls eine Gruppe von Körpern ein Hintergrundobjekt als einen konstituierenden Körper umfasst, dann Entfernen (208) aller konstituierenden Körper der Gruppe, während die jeweiligen Kollisionsflächen und visuellen Flächen bewahrt werden, und
falls eine Gruppe von Körpern nicht das Hintergrundobjekt als einen konstituierenden Körper umfasst, dann Modellieren (210) der Gruppe von Körpern als einen einzelnen zusammengefassten Körper, wobei der zusammengefasste Körper definierte Masseneigenschaften, Position und Orientierung aufweist, die basierend auf den Masseneigenschaften und der Struktur konstituierender Körper der Gruppe bestimmt werden, und
- Ausführen (212), durch den Computer, eines Simulationscodes, der Starrkörperdynamik für das Modellsystem basierend auf der Verarbeitung jeder Gruppe von Körpern löst.

2. Verfahren nach Anspruch 1, wobei eine Masse des zusammengefassten Körpers als eine Summe von Massen der konstituierenden Körper der Gruppe bestimmt wird.

3. Verfahren nach Anspruch 2, umfassend Bestimmen, durch den Computer, eines Massenschwerpunkts des zusammengefassten Körpers, um die Position des zusammengefassten Körpers zu definieren.

4. Verfahren nach Anspruch 3, umfassend Bestimmen, durch den Computer, eines Trägheitstensors des zusammengefassten Körpers als eine Summierung ursprünglicher Trägheitstensoren der konstituierenden Körper der Gruppe, wobei jeder ursprüngliche Trägheitstensor transformiert wird, um an den Massenschwerpunkt des zusammengefassten Körpers platziert zu werden, ohne jeweilige Winkelpositionen zu ändern.

5. Verfahren nach Anspruch 3, umfassend, dass das Bestimmen, durch den Computer, der Orientierung des zusammengefassten Körpers durch Bestimmen einer Winkeltransformation von einem der konstituierenden Körper im dreidimensionalen Raum definiert wird.

6. Verfahren nach Anspruch 3, umfassend Bestimmen, durch den Computer, einer Kollisionsfläche und einer visuellen Oberfläche des zusammengefassten Körpers durch jeweiliges Transformieren einer Sammlung von Kollisionsflächen und einer Sammlung visueller Oberflächen der konstituierenden Körper der Gruppe zu einem Ursprung, der durch den Massenschwerpunkt des zusammengefassten Körpers definiert wird.

7. Verfahren nach Anspruch 1, wobei das Identifizieren einer oder mehrerer Gruppen von Körpern umfasst:
Erzeugen, durch den Computer, eines Starrkörpergraphen, der eine Anordnung verbundener Knoten umfasst, wobei die Knoten die Körper des Modellsystems darstellen und Verbindungen zwischen den Knoten Gelenke zwischen den Körpern darstellen, und
Absuchen, durch den Computer, des Starrkörpergraphen über einen Breiten- oder einen Tiefensuchalgorithmus, um eine oder mehrere Gruppen von Körpern zu identifizieren, die durch feste Gelenke verbunden sind.

8. Verfahren nach Anspruch 1, ferner umfassend:
dynamisches Modifizieren, durch den Computer, der Gruppierung von Körpern im Modellsystem als Reaktion auf eine detektierte Änderung in Beschränkungen während der Ausführung des Simulationscodes, und
Verwenden der modifizierten Gruppierung von Körpern im Verarbeitungsschritt, um dadurch den Simulationscode zu modifizieren.

9. Verfahren nach Anspruch 1, ferner umfassend:
als Reaktion auf eine Benutzerabfrage, Zurückgeben, durch den Computer, einer Bewegungscharakteristik eines konstituierenden Körpers der Gruppe,
wobei die Bewegungscharakteristik des konstituierenden Körpers durch Transformieren einer Bewegungscharakteristik des zusammengefassten Körpers unter Verwendung eines Positionsoffsets und eines Rotationsoffsets zwischen dem konstituierenden Körper und dem zusammengefassten Körper bestimmt wird.

10. Verfahren nach Anspruch **1,** wobei das Modellsystem basierend auf einem Systemdesign der Industrieumgebung erzeugt wird, wobei das Systemdesign basierend auf einer oder mehreren Anweisungen von einem Benutzer erzeugt wird.

11. Verfahren nach Anspruch 1, ferner umfassend:
Anzeigen, durch den Computer, einer Simulation des Modellsystems in einer grafischen Benutzeroberfläche.

12. Nichtflüchtiges computerlesbares Speichermedium, wobei das computerlesbare Speichermedium Anweisungen beinhaltet, die bei Ausführung durch einen Computer (104; 902) den Computer (104; 902) veranlassen, das computerimplementierte Verfahren zum Simulieren einer Industrieumgebung einer Produktionsstätte nach einem der Ansprüche 1 bis 11 auszuführen.

13. System zum Simulieren einer Industrieumgebung einer Produktionsstätte, um die Bewegung von Objekten in der Industrieumgebung der Produktionsstätte mit Kollisionsreaktionen zu simulieren, wobei das System umfasst:
eine Modellierungseinheit, die ausgelegt ist zum Erzeugen (200) eines dreidimensionalen Modellsystems, das die Industrieumgebung der Produktionsstätte repräsentiert, wobei das Modellsystem eine Vielzahl von Körpern umfasst, die physische Komponenten der Industrieumgebung der Produktionsstätte repräsentieren, wobei jeder Körper des Modellsystems eine oder mehrere Kollisionsflächen, um Beschränkungen zu definieren, die die Oberfläche des jeweiligen Körpers repräsentieren, und eine oder mehrere visuelle Oberflächen, die einem Benutzer zum Visualisieren des jeweiligen Körpers präsentiert werden sollen, umfasst, und
eine Simulations-Engine, die ausgelegt ist zum:
Identifizieren (204) einer oder mehrerer Gruppen von Körpern aus der Vielzahl von Körpern, sodass Körper, die zu einer Gruppe gehören, durch feste Gelenke bezüglich zueinander beschränkt werden,
Verarbeiten jeder Gruppe von Körpern, wobei das Verarbeiten umfasst:
falls eine Gruppe von Körpern ein Hintergrundobjekt als einen konstituierenden Körper umfasst, dann Entfernen (208) aller konstituierenden Körper der Gruppe, während die jeweiligen Kollisionsflächen und visuellen Flächen bewahrt werden, und
falls eine Gruppe von Körpern nicht das Hintergrundobjekt als einen konstituierenden Körper umfasst, dann Modellieren (210) der Gruppe von Körpern als einen einzelnen zusammengefassten Körper, wobei der zusammengefasste Körper definierte Masseneigenschaften, Position und
Orientierung aufweist, die basierend auf den Masseneigenschaften und der Struktur konstituierender Körper der Gruppe bestimmt werden, und
Ausführen (212) eines Simulationscodes, der Starrkörperdynamik für das Modellsystem basierend auf der Verarbeitung jeder Gruppe von Körpern löst.

14. System nach Anspruch 13, ferner umfassend eine Netzwerkschnittstelle, die dazu ausgelegt ist, den Transfer von Daten zwischen dem System und der Industrieumgebung zu ermöglichen.

15. System nach Anspruch 13, wobei die Modellierungseinheit zum Erzeugen des Modellsystems basierend auf einem Systemdesign der Industrieumgebung ausgelegt ist, wobei das Systemdesign basierend auf einer oder mehreren Anweisungen von einem Benutzer erzeugt wird.

## Revendications

1. Procédé, mis en œuvre par ordinateur, de simulation d'un environnement industriel d'un site de production pour simuler le mouvement d'objets dans l'environnement industriel du site de production avec des réponses aux collisions, le procédé comportant :
- la création (200), par un ordinateur (104; 902), d'un système modèle tridimensionnel représentant l'environnement industriel du site de production, le système modèle comportant une pluralité de corps représentant des composants physiques de l'environnement industriel du site de production, chaque corps comportant une ou plusieurs surfaces de collision pour définir des contraintes représentant la surface du corps en question et une ou plusieurs surfaces visuelles à présenter à un utilisateur pour visualiser le corps en question,
- l'identification (204), par l'ordinateur, d'un ou de plusieurs groupes de corps parmi la pluralité de corps, de telle façon que des corps appartenant à un groupe soient contraints l'un par rapport à l'autre par des articulations fixes,
- le traitement, par l'ordinateur, de chaque groupe de corps, le traitement comportant :
si un groupe de corps comporte un objet d'arrière-plan en tant que corps constitutif, le retrait (208) de tous les corps constitutifs du groupe tout en conservant les surfaces de collision et les surfaces visuelles respectives, et
si un groupe de corps ne comporte pas l'objet d'arrière-plan en tant que corps constitutif, la modélisation (210) du groupe de corps en tant que corps fusionné unique, le corps fusionné présentant des propriétés de masse définies, une position et une orientation déterminées sur la base de propriétés de masse et d'une structure de corps constitutifs du groupe, et
- l'exécution (212), par l'ordinateur, d'un code de simulation résolvant une dynamique de corps rigides pour le système modèle sur la base dudit traitement de chaque groupe de corps.

2. Procédé selon la revendication 1, une masse du corps fusionné étant déterminée comme une somme de masses des corps constitutifs du groupe.

3. Procédé selon la revendication 2, comportant la détermination, par l'ordinateur, d'un centre de masse du corps fusionné pour définir la position du corps fusionné.

4. Procédé selon la revendication 3, comportant la détermination, par l'ordinateur, d'un tenseur d'inertie du corps fusionné comme une sommation de tenseurs d'inertie d'origine des corps constitutifs du groupe, chaque tenseur d'inertie d'origine étant transformé pour être placé au centre de masse du corps fusionné, sans modifier des positions angulaires respectives.

5. Procédé selon la revendication 3, comportant la détermination, par l'ordinateur, de l'orientation du corps fusionné définie en déterminant une transformation angulaire d'un des corps constitutifs dans l'espace tridimensionnel.

6. Procédé selon la revendication 3, comportant la détermination, par l'ordinateur, d'une surface de collision et d'une surface visuelle du corps fusionné en transformant respectivement une collection de surfaces de collision et une collection de surfaces visuelles des corps constitutifs du groupe vers une origine définie par le centre de masse du corps fusionné.

7. Procédé selon la revendication 1, ladite identification d'un ou plusieurs groupes de corps comportant :
la génération, par l'ordinateur, d'un graphe de corps rigides comportant un agencement de nœuds connectés, les nœuds illustrant les corps du système modèle et des liaisons entre les nœuds illustrant des articulations entre les corps, et
le balayage, par l'ordinateur, du graphe de corps rigides via un algorithme de recherche en largeur d'abord ou en profondeur d'abord, pour identifier un ou plusieurs groupes de corps liés par des articulations fixes.

8. Procédé selon la revendication 1, comportant en outre :
la modification dynamique, par l'ordinateur, du groupement de corps dans le système modèle en réponse à un changement détecté dans des contraintes au cours de l'exécution du code de simulation, et
l'utilisation du groupement modifié de corps lors de l'étape de traitement pour modifier ainsi le code de simulation.

9. Procédé selon la revendication 1, comportant en outre :
en réponse à une requête de l'utilisateur, le renvoi, par l'ordinateur, d'une caractéristique de mouvement d'un corps constitutif du groupe,
la caractéristique de mouvement du corps constitutif étant déterminée en transformant une caractéristique de mouvement du corps fusionné à l'aide d'un décalage de position et d'un décalage de rotation entre le corps constitutif et le corps fusionné.

10. Procédé selon la revendication 1, le système modèle étant créé sur la base d'une conception de système de l'environnement industriel, la conception de système étant générée sur la base d'une ou de plusieurs instructions provenant d'un utilisateur.

11. Procédé selon la revendication 1, comportant en outre :
l'affichage, par l'ordinateur, d'une simulation du système modèle dans une interface graphique d'utilisateur.

12. Support de stockage non transitoire lisible par ordinateur, le support de stockage lisible par ordinateur comprenant des instructions qui, lorsqu'elles sont exécutées par un ordinateur (104; 902), amènent l'ordinateur (104; 902) à exécuter le procédé, mis en œuvre par ordinateur, de simulation d'un environnement industriel d'un site de production selon une des revendications 1 à 11.

13. Système de simulation d'un environnement industriel d'un site de production, destiné à simuler le mouvement d'objets dans l'environnement industriel du site de production avec des réponses aux collisions, le système comportant :
une unité de modélisation configurée pour créer (200) un système modèle tridimensionnel représentant l'environnement industriel du site de production, le système modèle comportant une pluralité de corps représentant des composants physiques de l'environnement industriel du site de production, chaque corps du système modèle comportant une ou plusieurs surfaces de collision pour définir des contraintes représentant la surface du corps en question et une ou plusieurs surfaces visuelles à présenter à un utilisateur pour visualiser le corps en question, et
un moteur de simulation configuré pour :
identifier (204) un ou plusieurs groupes de corps parmi la pluralité de corps, de telle façon que des corps appartenant à un groupe soient contraints l'un par rapport à l'autre par des articulations fixes,
traiter chaque groupe de corps, le traitement comportant :
si un groupe de corps comporte un objet d'arrière-plan en tant que corps constitutif, le retrait (208) de tous les corps constitutifs du groupe tout en conservant les surfaces de collision et les surfaces visuelles respectives, et
si un groupe de corps ne comporte pas l'objet d'arrière-plan en tant que corps constitutif, la modélisation (210) du groupe de corps en tant que corps fusionné unique, le corps fusionné présentant des propriétés de masse définies, une position et
une orientation déterminées sur la base de propriétés de masse et d'une structure de corps constitutifs du groupe, et
exécuter (212) un code de simulation résolvant une dynamique de corps rigides pour le système modèle sur la base dudit traitement de chaque groupe de corps.

14. Système selon la revendication 13, comportant en outre une interface de réseau configurée pour faciliter un transfert de données entre le système et l'environnement industriel.

15. Système selon la revendication 13, l'unité de modélisation étant configurée pour créer le système modèle sur la base d'une conception de système de l'environnement industriel, la conception de système étant générée sur la base d'une ou de plusieurs instructions provenant d'un utilisateur.
